(19) **Europäisches Patentamt European Patent Office Office européen des brevets**

(11) **EP 4 589 893 A1**

(12) **EUROPEAN PATENT APPLICATION**
published in accordance with Art. 153(4) EPC

(43) Date of publication:
**23.07.2025 Bulletin 2025/30**

(21) Application number: **22958514.6**

(22) Date of filing: **16.09.2022**

(51) International Patent Classification (IPC):
**H04L 27/00** (2006.01)

(52) Cooperative Patent Classification (CPC):
**H04L 27/00**

(86) International application number:
**PCT/CN2022/119468**

(87) International publication number:
**WO 2024/055324 (21.03.2024 Gazette 2024/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventors:
• **CHI, Liangang**
  **Beijing 100085 (CN)**
• **YANG, Li**
  **Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **PRECODING METHOD AND APPARATUS BASED ON RECONFIGURABLE INTELLIGENT SURFACE**

(57) Disclosed in the embodiments of the present application are a precoding method and apparatus based on a reconfigurable intelligent surface. The method comprises: acquiring unit arrangement information and block information of a second network device, wherein the block information is used for indicating a plurality of blocks of the second network device, receiving channel feedback information sent by a terminal device; and sending first information to the second network device, wherein the first information is used for determining a phase shift matrix of the second network device, and the first information comprises the channel feedback information and position information of the terminal device relative to the second network device. Therefore, units of a second network device can be divided into a plurality of groups, such that a far-field hypothesis is established for each group, and the complexity of precoding based on a reconfigurable intelligent surface is also effectively reduced, thereby accelerating the industrialization process, improving the communication efficiency of a communication system assisted by a reconfigurable intelligent surface, and reducing interference.

```
obtaining unit arrangement information and block information
of a second network device, wherein the block information          201
indicates a plurality of blocks of the second network device

receiving channel feedback information sent by a terminal          202

sending first information to the second network device, wherein
the first information is configured to determine a phase shift
matrix of the second network device, and the first information     203
includes the channel feedback information and location
information of the terminal relative to the second network
device
```

FIG. 2

## Description

## TECHNICAL FIELD

The disclosure relates to the field of communication technology, and in particular to a method and an apparatus for precoding based on a reconfigurable intelligent surface (RIS).

## BACKGROUND

Since the difficulty of controlling the wireless environment in conventional communications tends to degrade service quality, research into deploying reconfigurable intelligent surface (RIS) on surfaces of various types of objects in wireless transmission environments holds the potential to overcome the unpredictability of traditional wireless channels. This could lead to the creation of intelligent, programmable wireless networks and introduce a new paradigm for future wireless communications.

However, the size of RIS arrays tends to be large and comparable to the propagation distance, and precoding schemes with traditional far-field assumptions may no longer be applicable.

## SUMMARY

A first aspect of embodiments of the disclosure provides a method for precoding based on a reconfigurable intelligent surface (RIS). The method is performed by a first network device, including:

obtaining unit arrangement information and block information of a second network device, in which the block information indicates a plurality of blocks of the second network device;

receiving channel feedback information sent by a terminal, in which the channel feedback information is determined by the terminal based on a reference signal sent by each block of the second network device; and

sending first information to the second network device, in which the first information is configured to determine a phase shift matrix of the second network device, and the first information includes the channel feedback information and location information of the terminal relative to the second network device.

A second aspect of embodiments of the disclosure provides a method for precoding based on an RIS. The method is performed by a second network device, including:

sending unit arrangement information and block information of the second network device to a first network device, in which the block information indicates a plurality of blocks of the second network device;

sending a reference signal to a terminal, in which the reference signal is used by the terminal to determine channel feedback information of a channel between the second network device and the terminal;

receiving first information sent by the first network device, in which the first information includes the channel feedback information and location information of the terminal relative to the second network device; and

determining a phase shift matrix of the second network device based on the first information.

A third aspect of embodiments of the disclosure provides a method for precoding based on an RIS. The method is performed by a terminal, including:

receiving a reference signal sent by each block of a second network device;

determining channel feedback information of a channel between the second network device and the terminal based on the reference signal; and

sending the channel feedback information to a first network device, in which the channel feedback information is included in first information, the first information is configured to determine a phase shift matrix of the second network device, and the first information further includes location information of the terminal relative to the second network device.

A fourth aspect of embodiments of the disclosure provides an apparatus for precoding based on an RIS. The apparatus is applied to a first network device, including:

a transceiver unit, configured to obtain unit arrangement information and block information of a second network device, in which the block information indicates a plurality of blocks of the second network device;

the transceiver unit is further configured to receive channel feedback information sent by a terminal, in which the channel feedback information is determined by the terminal based on a reference signal sent by each block of the second network device;

the transceiver unit is further configured to send first information to the second network device, in which the first information is configured to determine a phase shift matrix of the second network device, and the first information includes the channel feedback information and location information of the terminal relative to the second network device.

A fifth aspect of embodiments of the disclosure provides an apparatus for precoding based on an RIS. The apparatus is applied to a second network device, including:

a transceiver unit, configured to send unit arrangement information and block information of the apparatus to a first network device, in which the block information indicates a plurality of blocks of the apparatus;

the transceiver unit is further configured to send a reference signal to a terminal, in which the reference signal is used by the terminal to determine channel feedback information of a channel between the apparatus and the terminal;

the transceiver unit is further configured to receive first information sent by the first network device, in which the first information includes the channel feedback information and location information of the terminal relative to the apparatus; and

a processing unit, configured to determine a phase shift matrix of the apparatus based on the first information.

A sixth aspect of embodiments of the disclosure provides an apparatus for precoding based on an RIS. The apparatus is applied to a terminal, including:

a transceiver unit, configured to receive a reference signal sent by each block of a second network device; and

a processing unit, configured to determine channel feedback information of a channel between the second network device and the apparatus based on the reference signal;

the transceiver unit is further configured to send the channel feedback information to a first network device, in which the channel feedback information is included in first information, the first information is configured to determine a phase shift matrix of the second network device, and the first information further includes location information of the apparatus relative to the second network device.

A seventh aspect of embodiments of the disclosure provides a communication device. The device includes a processor and a memory. The memory stores a computer program, and the processor is configured to execute the computer program, to cause the device to implement the method for precoding based on an RIS according to the first aspect, or implement the method for precoding based on an RIS according to the second aspect.

An eighth aspect of embodiments of the disclosure provides a communication device. The device includes a processor and a memory. The memory stores a computer program, and the processor is configured to execute the computer program, to cause the device to implement the method for precoding based on an RIS according to the third aspect is implemented, or implement the method for precoding based on an RIS according to the fourth aspect.

A ninth aspect of embodiments of the disclosure provides a communication device. The device includes a processor and an interface circuit; in which the interface circuit is configured to receive code instructions and transmit the code instructions to the processor; and the processor is configured to execute the code instructions to cause the device to implement the method for precoding based on an RIS according to the first aspect or the method for precoding based on an RIS according to the second aspect.

A tenth aspect of embodiments of the disclosure provides a communication device. The device includes a processor and an interface circuit; in which the interface circuit is configured to receive code instructions and transmit the code instructions to the processor; and the processor is configured to execute the code instructions to cause the device to implement the method for precoding based on an RIS according to the third aspect.

An eleventh aspect of embodiments of the disclosure provides a computer-readable storage medium. The computer-readable storage medium is configured to store instructions, in which when the instructions are executed, the method for precoding based on an RIS according to the first aspect is implemented, or the method for precoding based on an RIS according to the second aspect is implemented.

A twelfth aspect of embodiments of the disclosure provides a computer-readable storage medium. The computer-readable storage medium is configured to store instructions, in which when the instructions are executed, the method for precoding based on an RIS according to the third aspect is implemented.

A thirteenth aspect of embodiments of the disclosure provides a computer program, which, when run on a computer, causes the computer to implement the method for precoding based on an RIS according to the first aspect, or the method for precoding based on an RIS according to the second aspect.

A fourteenth aspect of embodiments of the disclosure provides a computer program, which, when run on a computer, causes the computer to implement the method for precoding based on an RIS according to the third aspect.

Embodiments of the disclosure provide a method and an apparatus for precoding based on an RIS. By obtaining the unit arrangement information and the block information of a second network device, in which the block information indicates the plurality of blocks of the second network device, receiving the channel feedback information sent by the terminal, and sending the first information to the second network device, in which the first information is configured to determine a phase shift matrix of the second network device, and the first information includes the channel feedback information and location information of the terminal relative to the second network device, the units of the second network device are divided into a plurality of groups, so that a far-field assumption holds for each group. This approach effectively reduces the complexity of precoding based on the RIS, accelerates the industrialization process, improves a communication efficiency of RIS-assisted communication system, and reduces interference.

Additional aspects and advantages of the present disclosure will be set forth in part in the description which follows, and in part will be obvious from the description, or will be learned by practice of the present disclosure.

## BRIEF DESCRIPTION OF THE DRAWINGS

To more clearly illustrate the technical solutions of the embodiments of the disclosure, the drawings required for use in the description of the embodiments of the disclosure may be briefly introduced below.

FIG. 1 is a schematic diagram illustrating an architecture of a communication system provided in an embodiment of the disclosure.
FIG. 2 is a flow chart illustrating a method for precoding based on a reconfigurable intelligent surface (RIS) provided in an embodiment of the disclosure.
FIG. 3 is a flow chart illustrating a method for precoding based on an RIS provided in an embodiment of the disclosure.
FIG. 4a is a schematic diagram illustrating a spatial location of a terminal and a second network device provided in an embodiment of the disclosure.
FIG. 4b is a schematic diagram illustrating a spatial x-axis and z-axis plane of a terminal and a second network device provided in an embodiment of the disclosure.
FIG. 4c is a schematic diagram illustrating a spatial x-axis and y-axis plane of a terminal and a second network device provided in an embodiment of the disclosure.
FIG. 5 is a flow chart illustrating a method for precoding based on an RIS provided in an embodiment of the disclosure.
FIG. 6 is a flow chart illustrating a method for precoding based on an RIS provided in an embodiment of the disclosure.
FIG. 7 is a flow chart illustrating a method for precoding based on an RIS provided in an embodiment of the disclosure.
FIG. 8 is a flow chart illustrating a method for precoding based on an RIS provided in an embodiment of the disclosure.
FIG. 9 is a block diagram illustrating an apparatus for precoding based on an RIS provided in an embodiment of the disclosure.
FIG. 10 is a block diagram illustrating an apparatus for precoding based on an RIS provided in an embodiment of the disclosure.
FIG. 11 is a block diagram illustrating an apparatus for precoding based on an RIS provided in an embodiment of the disclosure.
FIG. 12 is a block diagram illustrating another apparatus for precoding based on an RIS provided in an embodiment of the disclosure.
FIG. 13 is a block diagram illustrating a chip provided in an embodiment of the disclosure.

## DETAILED DESCRIPTION

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the disclosure. Rather, they are merely examples of devices and methods consistent with aspects of the embodiments of the disclosure as recited in the appended claims.

Terms used in the embodiments of the disclosure are for the purpose of describing specific embodiments only, and are not intended to limit the embodiments of the disclosure. As used in the examples of this disclosure and the appended claims, the singular forms "a", "said" and "the" are also intended to include the plural forms unless the context clearly dictates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" as used herein may be interpreted as "in a case that" or "when" or "in response to a determination".

Embodiments of the disclosure are described in detail below, and examples of the embodiments are illustrated in the accompanying drawings, in which the same or similar symbols from beginning to end indicate the same or similar elements. The embodiments described below by reference to the accompanying drawings are exemplary and are intended to be used to explain the disclosure and are not to be construed as a limitation of the disclosure.

In order to better understand a method for precoding based on a reconfigurable intelligent surface (RIS) in embodiments of the disclosure, a communication system to which embodiments of the disclosure are applicable is described below.

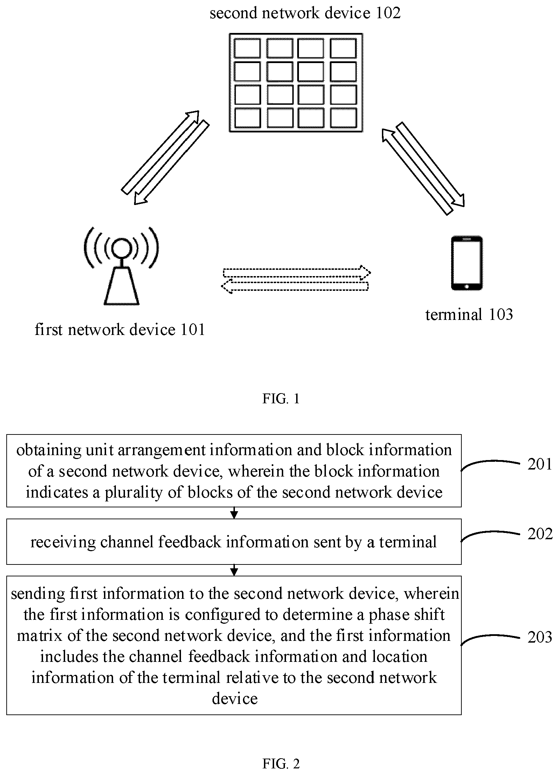

FIG. 1 is a diagram illustrating an architecture of a communication system according to embodiments of the disclosure. The communication system may include, but is not limited to, one first network device, one second network device and one terminal. A number and a form of the devices shown in FIG. 1 are only for example and do not constitute a limitation to embodiments of the disclosure, and two or more network devices and two or more terminals may be included in practical applications. The communication system as illustrated in FIG. 1 includes one first network device 101, one second network device 102 and one terminal 103 for example.

It should be noted that technical solutions in embodiments of the disclosure are applicable to various communication systems, for example, a long term evolution (LTE) system, a 5th generation (5G) mobile communication system, a 5G new radio (NR) system or other future new mobile communication systems.

The first network device 101 in embodiments of the disclosure is an entity for transmitting or receiving a signal at a network side. For example, the first network device 101 may be an evolved NodeB (eNB), a transmission reception point (TRP), a next generation NodeB (gNB) in a NR system, a base station in other future mobile communication systems, or an access node in a wireless fidelity (WiFi) system. A specific technology and a specific device form adopted by the network device are not limited in embodiments of the disclosure. The network device according to embodiments of the disclosure may consist of a central unit (CU) and a distributed unit (DU). The CU may also be referred to as a control unit. The protocol layers of a network device such as a base station may be split by using a structure of the CU-DU, so that the functions for a part of the protocol layers are placed in the CU for centralized control, and functions of a remaining part or all of the protocol layers are distributed in the DU, and the DU is centrally controlled by the CU.

The second network device 102 in embodiments of the disclosure is a device capable of regulating a communication channel. The second network device 102 is equipped with a large number of (electromagnetic) units and is capable of adjusting physical properties (e.g., capacitive reactance, impedance, or inductive reactance) of the (electromagnetic) units to change the radiation characteristics of the (electromagnetic) units, which allows for dynamic modulation of electromagnetic waves in space, thus enabling formation of beams in specific directions in space. For example, the second network device 102 may be an RIS or the like. In embodiments of the disclosure, the (electromagnetic) unit in the second network device 102 may be active or passive. Additionally, some (electromagnetic) units in the second network device 102 may be active and some (electromagnetic) units may be passive.

The terminal 103 in embodiments of the disclosure is an entity for receiving or transmitting a signal at a user side, for example, a mobile phone. The terminal may be referred to as a terminal, a user equipment (UE), a mobile station (MS), a mobile terminal (MT), etc. The terminal may be an automobile with a communication function, a smart automobile, a mobile phone, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. A specific technology adopted by the terminal and a specific device form adopted by the terminal are not limited in embodiments of the disclosure.

In conventional communications, the wireless environment is an uncontrollable factor that typically has a negative effect on communication efficiency and degrades service quality. For example, signal attenuation limits the propagation distance of wireless signals, multipath effects cause fading phenomena, and reflections and refractions from large objects are major uncontrollable factors. Deploying RIS on surfaces of various types of objects in wireless transmission environments holds the potential to overcome the uncontrollability of traditional wireless channels. This could lead to the creation of intelligent, programmable wireless networks and introduce a new paradigm for future wireless communications. In particular, the RIS may use precoding techniques to reflect or transmit signals incident upon its surface in specific directions, thus enhancing the received signal strength or reducing interference, which allows for dynamic control of the communication channel.

As shown in FIG. 1, in a communication system assisted by the second network device 102 (RIS), the first network device 101 reflects or transmits a signal to the terminal 103 via the second network device 102 (RIS), or the terminal 103 reflects or transmits a signal to the first network device 101 via the second network device 102 (RIS). To enhance the power of the useful signal and to reduce interference, the second network device 102 needs to be pre-coded.

In the related art, the complexity of the method for determining precoding of the second network device 102 (RIS) is high. In academic research, the precoding at the RIS and the base station is mainly designed jointly by alternating optimization techniques. Although this method may obtain optimal performance, the complexity is excessive and is not suitable for practical applications. At the same time, the size of RIS arrays tends to be large and comparable to the propagation distance, and precoding schemes with traditional far-field assumptions may no longer be applicable. Thus, practical RIS precoding schemes have become a key technology for RIS industrialization.

It may be understood that, the communication system described in embodiments of the disclosure are intended to explain technical solutions of embodiments of the disclosure more clearly, and does not constitute a limitation to the technical solutions provided by embodiments of the disclosure. Those skilled in the art know that, with evolution of a system architecture and emergence of a new business scenario, the technical solutions provided in embodiments of the disclosure are equally applied to similar technical problems.

A method and an apparatus for precoding based on an RIS in the disclosure are further described in combination with attached drawings.

Refer to FIG. 2, which is a flow chart illustrating a method for precoding based on an RIS provided in an embodiment of the disclosure. It should be noted that the method for precoding based on an RIS of this embodiment of the disclosure is performed by a first network device. The method may be performed independently or may be performed in combination with any one of other embodiments of the disclosure. As shown in FIG. 2, the method may include the following steps 201 to 203.

At step 201, unit arrangement information and block information of a second network device are obtained, in which the block information indicates a plurality of blocks of the second network device.

It should be noted that in embodiments of the disclosure, the second network device may be an RIS.

In an embodiment of the disclosure, the first network device may obtain the unit arrangement information and the block information of the second network device. The block information of the second network device indicates the plurality of blocks of the second network device. The unit arrangement information of the second network device can indicate how units in the second network device are arranged.

It should be noted that each block of the second network device is a contiguous portion of the second network device, such as a contiguous piece of RIS surface in the RIS.

It may be understood that the first network device may determine arrangements of units in the second network device by obtaining the unit arrangement information of the second network device. The first network device may determine each block of the second network device by obtaining the block information of the second network device.

In some implementations, the unit arrangement information may include at least one of: a number of rows of the units of the second network device; a number of columns of the units of the second network device; a row spacing of the units of the second network device; a column spacing of the units of the second network device; or a unit of the second network device that is capable of sending a reference signal (which may also be an active unit of the second network device).

In some implementations, the block information may include at least one of: a number of rows of the units included in each block; a number of columns of units included in each block; or a unit at the center of each block.

It may be understood that the unit arrangement information and the block information of the second network device are flexibly configurable based on a specific shape of the second network device and the like. For example, if the second network device is a circle, the unit arrangement information of the second network device may also include a radius or a diameter of the second network device, etc., and the block information may also include other information to indicate each block of the second network device.

In an embodiment of the disclosure, the first network device may receive the unit arrangement information and/or the block information reported by the second network device, or the first network device may obtain the unit arrangement information and/or the block information of the second network device in an offline phase.

In some implementations, the first network device may also obtain the block information of the second network device by configuring the plurality of blocks of the second network device based on the unit arrangement information of the second network device.

In an embodiment of the disclosure, each block of the second network device can send a reference signal.

At step 202, channel feedback information sent by a terminal is received.

In an embodiment of the disclosure, the first network device can receive the channel feedback information sent by the terminal, in which the channel feedback information is determined by the terminal based on a reference signal sent by each block of the second network device. The channel feedback information can reflect a state of the channel between each block of the second network device and the terminal.

In some implementations, the channel feedback information includes: a plurality of precoding matrix indicators (PMIs) and an index of a reference signal corresponding to each PMI. The PMI indicates a precoding matrix of a channel between each block of the second network device and the terminal.

It may be understood that each block of the second network device can send the reference signal. The terminal receives the reference signal sent by each block and obtain the precoding matrix of a channel between each block and the terminal by estimating the reference signal. The precoding matrix of the channel between each block and the terminal is indicated by a PMI, and the reference signal sent by that block is indicated by an index of the reference signal corresponding to the PMI.

Optionally, the precoding matrix indicated by the PMI included in the channel feedback information is an optimal precoding matrix selected by the terminal based on a 2-dimensional discrete Fourier transform (DFT) codebook.

In some implementations, the first network device can send first reference signal configuration information to the second network device based on the unit arrangement information and the block information. The first reference signal configuration information is configured to determine the reference signal sent by each block of the second network device.

Optionally, the first reference signal configuration information may include at least one of:

a unit in the block occupied by the reference signal sent by each block;
generation information of a reference signal sequence sent by each block;
an antenna port serial number occupied by the reference signal sent by each block; or
a time and frequency resource occupied by the reference signal sent by each block.

In some implementations, the first network device can send second reference signal configuration information to the terminal based on the unit arrangement information and the block information. The second reference signal configuration information is configured for the terminal to receive the reference signal sent by each block of the second network device.

Optionally, the second reference signal configuration information may include at least one of:

generation information of a reference signal sequence sent by each block;
an antenna port serial number occupied by the reference signal sent by each block; or
a time and frequency resource occupied by the reference signal sent by each block.

It may be understood that basic information (the generation information of the reference signal sequence, the antenna port serial number occupied by the reference signal, and the time and frequency resource occupied by the reference signal) of the reference signal sent by each block in the first reference signal configuration information and the second reference signal configuration information are identical. The terminal may receive the reference signal sent by the second network device based on the first reference signal configuration information, based on the second reference signal configuration information.

At step 203, first information is sent to the second network device, in which the first information is configured to determine a phase shift matrix of the second network device, and the first information includes the channel feedback information and location information of the terminal relative to the second network device.

In an embodiment of the disclosure, the first network device can send the first information to the second network device. This first information is configured to determine the phase shift matrix of the second network device. The first information includes the received channel feedback information, and the determined location information of the terminal relative to the second network device. The second network device may determine its own phase shift matrix based on the first information.

The phase shift matrix is configured to configure a phase of each unit in the second network device, that is, to precode the second network device. The second network device may adjust the phase of each unit of the second network device based on the phase shift matrix configuration, realizing the precoding of the second network device, and may reflect or transmit a signal incident on a surface of the second network device.

In an embodiment of the disclosure, the first network device may determine the location information of the terminal relative to the second network device based on the received channel feedback information, and the obtained unit arrangement information and the block information.

In some implementations, the first network device may determine the location information based on an inter block distance of the second network device, and the precoding matrix of the channel between each block of the second network device and the terminal.

Optionally, the first network device may determine a reference coordinate system where the second network device and the terminal are located. The location information of the terminal relative to the second network device can be represented by the coordinate in the reference coordinate system.

Optionally, the first network device and the second network device may establish a coordinate system via a coordinate axis establishment method specified by a protocol, and obtain a coordinate of the terminal in the coordinate system. For example, the protocol may specify that the reference coordinate system is a right-angle coordinate system and that the center of the second network device is the origin, the direction perpendicular to the plane of the second network device is the z-axis, and the plane in which the second network device is located is the xy-plane. For another example, the protocol may specify that the reference coordinate system is a spherical coordinate system and that the center of the second network device is the origin.

Optionally, the first network device and the second network device may also determine the coordinate axis establishment method of the coordinate system through negotiation via signaling. For example, the first network device may determine the reference coordinate system based on the shape and size of the second network device and a relative location to the terminal.

In some implementations, the first information is configured to determine a reference phase shift matrix of the second network device. The phase shift matrix of the second network device is obtained by quantizing the reference phase shift matrix based on a phase offset value supported by the second network device. That is, the second network device may determine the reference phase shift matrix based on the first information, and obtain the phase shift matrix (a phase shift matrix that is ultimately actually used) by quantizing that reference phase shift matrix based on the phase offset value supported by itself.

It may be understood that the phase offset value supported by the second network device includes several discrete values, rather than continuous, and that the phases of respective units in the second network device are not continuously adjustable.

Optionally, the criterion for the quantization may be a minimum distance criterion. The phase shift matrix (the phase shift matrix that is ultimately actually used) is obtained by quantizing the reference phase shift matrix to the closest supported phase shift value to the reference phase shift matrix.

In some implementations, the reference phase shift matrix is determined based on the location information, the unit arrangement information of the second network device, the block information, and incident angle information between the first network device and the second network device.

The incident angle information between the first network device and the second network device refers to information about the angle at which a signal from the first network device is incident on the surface of the second network device.

Optionally, the first network device may send the incident angle information to the second network device, and the second network device may also measure and estimate the incident angle information by itself.

In some implementations, coordinate information of the terminal in the determined reference coordinate system and coordinate information of each unit of the second network device in the reference coordinate system are used to determine a phase shift of each unit of the second network device. The phase shift of each unit of the second network device and the incident angle information between the first network device and the second network device are used to determine the reference phase shift matrix.

In summary, by obtaining the unit arrangement information and the block information of a second network device, in which the block information indicates the plurality of blocks of the second network device, receiving the channel feedback information sent by the terminal, and sending the first information to the second network device, in which the first information is configured to determine a phase shift matrix of the second network device, and the first information includes the channel feedback information and location information of the terminal relative to the second network device, the units of the second network device are divided into a plurality of groups, so that a far-field assumption holds for each group. This approach effectively reduces the complexity of precoding based on the RIS, accelerates the industrialization process, improves a communication efficiency of RIS-assisted communication system, and reduces interference.

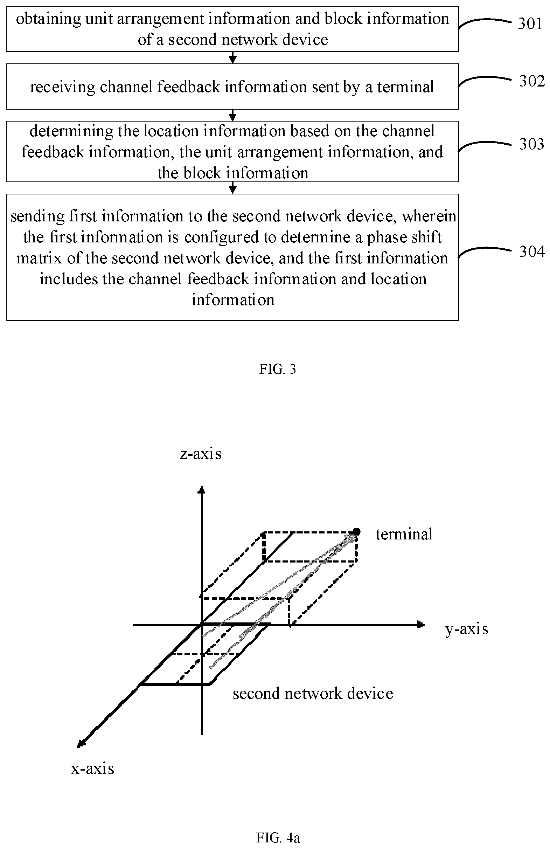

Please refer to FIG. 3, which is a flow chart illustrating a method for precoding based on an RIS provided in an embodiment of the disclosure. It should be noted that the method for precoding based on an RIS of this embodiment of the disclosure is performed by a first network device. The method may be performed independently or may be performed in combination with any one of other embodiments of the disclosure. As shown in FIG. 3, the method may include the following steps 301 to 304.

At step 301, unit arrangement information and block information of a second network device are obtained.

It should be noted that in embodiments of the disclosure, the second network device may be an RIS.

In an embodiment of the disclosure, the first network device may obtain the unit arrangement information and the block information of the second network device. The block information of the second network device indicates the plurality of blocks of the second network device. The unit arrangement information of the second network device can indicate arrangements of units in the second network device.

It should be noted that each block of the second network device is a contiguous portion of the second network device, such as a contiguous piece of RIS surface in the RIS.

It may be understood that the first network device may determine arrangements of units in the second network device by obtaining the unit arrangement information of the second network device. The first network device may determine each block of the second network device by obtaining the block information of the second network device.

In some implementations, the unit arrangement information may include at least one of: a number of rows of the units of the second network device; a number of columns of the units of the second network device; a row spacing of the units of the second network device; a column spacing of the units of the second network device; or a unit of the second network device that is capable of sending a reference signal (which may also be an active unit of the second network device).

In some implementations, the block information may include at least one of: a number of rows of the units included in each block; a number of columns of units included in each block; or a unit at the center of each block.

It may be understood that the unit arrangement information and the block information of the second network device are flexibly configurable based on a specific shape of the second network device and the like. For example, if the second network device is a circle, the unit arrangement information of the second network device may also include a radius or a diameter of the second network device, etc., and the block information may also include other information to indicate each block of the second network device.

In an embodiment of the disclosure, the first network device may receive the unit arrangement information and/or the block information reported by the second network device, or the first network device may obtain the unit arrangement information and/or the block information of the second network device in an offline phase.

In some implementations, the first network device may also obtain the block information of the second network device by configuring the plurality of blocks of the second network device based on the unit arrangement information of the second network device.

In an embodiment of the disclosure, each block of the second network device can send a reference signal.

At step 302, channel feedback information sent by a terminal is received.

In an embodiment of the disclosure, the first network device may receive the channel feedback information sent by the terminal, in which the channel feedback information is determined by the terminal based on a reference signal sent by each block of the second network device. The channel feedback information may reflect a state of the channel between each block of the second network device and the terminal.

In some implementations, the channel feedback information includes: a plurality of PMIs and an index of a reference signal corresponding to each PMI. The PMI indicates a precoding matrix of a channel between each block of the second network device and the terminal.

It may be understood that each block of the second network device may send the reference signal. The terminal receives the reference signal sent by each block and obtain the precoding matrix of a channel between each block and the terminal by estimating the reference signal. The precoding matrix of the channel between each block and the terminal is indicated by a PMI, and the reference signal sent by that block is indicated by an index of the reference signal corresponding to the PMI.

Optionally, the precoding matrix indicated by the PMI included in the channel feedback information is an optimal precoding matrix selected by the terminal based on a 2-dimensional DFT codebook.

It should be noted that, similarly, the channel used by the first network device to receive the channel feedback information sent by the terminal may also be a channel that passes through the second network device or a LOS channel that does not pass through the second network device, which is not limited in the disclosure.

In some implementations, the first network device may send first reference signal configuration information to the second network device based on the unit arrangement information and the block information. The first reference signal configuration information is configured to determine the reference signal sent by each block of the second network device. The second network device may determine the reference signal sent by each block based on the first reference signal configuration information.

Optionally, the first reference signal configuration information may include at least one of: a unit in the block occupied by the reference signal sent by each block; generation information of a reference signal sequence sent by each block; an antenna port serial number occupied by the reference signal sent by each block; or a time and frequency resource occupied by the reference signal sent by each block.

In some implementations, the first network device may also send second reference signal configuration information to the terminal. The second reference signal configuration information is configured for the terminal to receive the reference signal sent by each block of the second network device.

In an embodiment of the disclosure, the second reference signal configuration information may be identical to or different from the first reference signal configuration information (e.g., the second reference signal configuration information may not include the unit in the block occupied by the reference signal sent by each block).

Optionally, the second reference signal configuration information may include at least one of: generation information of a reference signal sequence sent by each block; an antenna port serial number occupied by the reference signal sent by each block; or a time and frequency resource occupied by the reference signal sent by each block.

It may be understood that basic information (the generation information of the reference signal sequence, the antenna port serial number occupied by the reference signal, and the time and frequency resource occupied by the reference signal) of the reference signal sent by each block in the first reference signal configuration information and the second reference signal configuration information are identical. The terminal may receive the reference signal sent by the second network device based on the first reference signal configuration information, based on the second reference signal configuration information.

It should be noted that, similarly, the channel used by the first network device to send the reference signal configuration information to the terminal may be a channel that passes through the second network device or a LOS channel that does not pass through the second network device, which is not limited in the disclosure.

At step 303, location information of the terminal relative to the second network device is determined based on the channel feedback information, the unit arrangement information, and the block information.

In an embodiment of the disclosure, the first network device may determine the location information of the terminal relative to the second network device based on the channel feedback information, the unit arrangement information, and the block information.

In some implementations, the first network device may determine the location information based on an inter block distance of the second network device, and the precoding matrix of the channel between each block of the second network device and the terminal. The channel feedback information includes a plurality of PMIs and an index of a reference signal corresponding to each PMI. The PMI indicates a precoding matrix of a channel between each block of the second network device and the terminal.

Optionally, the first network device may determine a reference coordinate system where the second network device and the terminal are located. The location information of the terminal relative to the second network device can be represented by the coordinate in the reference coordinate system.

Optionally, the first network device and the second network device may establish a coordinate system via a coordinate axis establishment method specified by a protocol, and obtain a coordinate of the terminal in the coordinate system. For example, the protocol may specify that the reference coordinate system is a right-angle coordinate system and that the center of the second network device is the origin, the direction perpendicular to the plane of the second network device is the z-axis, and the plane in which the second network device is located is the xy-plane. For another example, the protocol may specify that the reference coordinate system is a spherical coordinate system and that the center of the second network device is the origin. The first network device and the second network device may also negotiate and determine the coordinate axis establishment method of the coordinate system via signaling. For example, the first network device may determine the reference coordinate system based on the shape and size of the second network device and a relative location to the terminal.

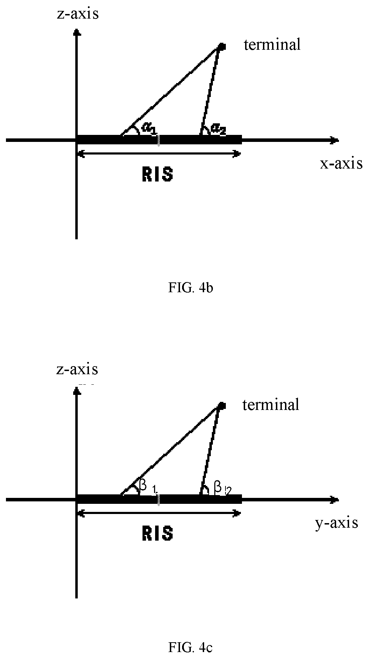

In embodiments of the disclosure, as an example, determining the location information of the terminal may be described as follows. Please refer to FIG. 4a to FIG. 4c, in which FIG. 4a is a schematic diagram illustrating a spatial location of a terminal and a second network device provided in an embodiment of the disclosure, FIG. 4b is a schematic diagram illustrating a spatial x-axis and z-axis plane, and FIG. 4c is a schematic diagram illustrating a spatial x-axis and y-axis plane.

FIG. 4a is merely an example, illustrating one way to establish a coordinate axis, and other ways of establishing coordinate axis may be used to establish a coordinate system. As shown in FIG. 4a, a xy plane is established based on the plane where the second network device is located, with the normal direction of the second network device being the z-axis. The second network device is divided into four blocks.

From the direction of y-axis in FIG. 4a, the second network device is divided into two blocks along the x-axis, and both blocks are located on the right side of the z-axis, i.e., the positive half-axis of the x-axis (as shown in FIG. 4b). By using the PMI corresponding to each block of the second network device, the horizontal dimension (the dimension corresponding to the x-axis)

direction angles $\alpha_1$ and $\alpha_2$ corresponding to each block of the second network device may be obtained.

By using angles $\alpha_1$ and $\alpha_2$ and the horizontal distance between the blocks of the second network device, the horizontal position of the terminal may be determined. If the inter block distance between the two blocks of the second network device is set to be D, the coordinate of the terminal in the xz-plane is ($d_y$, $d_z$), in which

$$d_x = d_z \frac{1}{\tan(\alpha_1)} + \frac{D}{2}, \quad d_z = \frac{D}{\frac{1}{\tan(\alpha_1)} - \frac{1}{\tan(\alpha_2)}}.$$

In similar, from the direction of x-axis in FIG. 4a, the second network device is divided into two blocks along the y-axis, and both blocks are located on the right side of the z-axis, i.e., the positive half-axis of the x-axis (as shown in FIG. 4c). By using the PMI corresponding to each block of the second network device, the horizontal dimension (the dimension corresponding to the y-axis) direction angles $\beta_1$ and $\beta_2$ corresponding to each block of the second network device may be obtained.

By using angles $\beta_1$ and $\beta_2$ and the horizontal distance between the blocks of the second network device, the horizontal position of the terminal may be determined. If the inter block distance between the two blocks of the second network device is set to be D', the coordinate of the terminal in the yz-plane are ($d_y$, $d_z$), in which

$$d_y = d_z \frac{1}{\tan(\beta_1)} + \frac{D'}{2}, \quad d_z = \frac{D'}{\frac{1}{\tan(\beta_1)} - \frac{1}{\tan(\beta_2)}}.$$

Further, based on the coordinates of the terminal in the xz-plane and the yz-plane, the coordinate of the terminal in the coordinate system is obtained, and thus the location of the terminal relative to the second network device is obtained.

It may be understood that the method of determining the location information of the terminal relative to the second network device described above is shown only as an example. The first network device may also use other methods to determine the location information of the terminal relative to the second network device based on the channel feedback information sent by the terminal, and the unit arrangement information and the block information of the second network device.

In various embodiments of the disclosure, the first network device may also use various methods to determine the location information of the terminal relative to the second network device based on the channel feedback information, and the unit arrangement information and the block information of the second network device.

At step 304, first information is sent to the second network device, in which the first information is configured to determine a phase shift matrix of the second network device, and the first information includes the channel feedback information and the location information.

In an embodiment of the disclosure, the first network device may send the first information to the second network device. This first information is configured to determine the phase shift matrix of the second network device. The first information includes the received channel feedback information, and the determined location information. The second network device may determine its own phase shift matrix based on the first information.

The phase shift matrix is configured to configure a phase of each unit in the second network device, that is, to precode the second network device. The second network device may configure and adjust the phase of each unit of the second network device based on the phase shift matrix, realizing the precoding of the second network device, and may reflect or transmit a signal incident on a surface of the second network device.

In some implementations, the first information is configured to determine a reference phase shift matrix of the second network device; and the phase shift matrix of the second network device is obtained by quantizing the reference phase shift matrix based on a phase offset value supported by the second network device. That is, the second network device may determine the reference phase shift matrix based on the first information, and obtain the phase shift matrix (a phase shift matrix that is ultimately actually used) by quantizing that reference phase shift matrix based on the phase offset value supported by the second network device.

It may be understood that the phase offset value supported by the second network device includes several discrete values, rather than continuous, and that the phases of respective units in the second network device are not continuously adjustable.

Optionally, the criterion for the quantization may be a minimum distance criterion. The phase shift matrix (the phase shift matrix that is ultimately actually used) is obtained by quantizing the reference phase shift matrix to the closest supported phase shift value to the reference phase shift matrix.

In some implementations, the reference phase shift matrix is determined based on the location information, the unit arrangement information of the second network device, the block information, and incident angle information between the first network device and the second network device.

The incident angle information between the first network device and the second network device refers to information about the angle at which a signal from the first network device is incident on the surface of the second network device.

Optionally, the first network device may send the incident angle information to the second network device, and the second network device may also measure and estimate the incident angle information by itself.

In some implementations, coordinate information of the terminal in the determined reference coordinate system and coordinate information of each unit of the second network device in the reference coordinate system are used to determine a phase shift of each unit of the second network device. The phase shift of each unit of the second network device and the incident angle information between the first network device and the second network device are used to determine the reference phase shift matrix.

Optionally, in embodiments of the disclosure, a variety of ways may be used to determine the reference phase shift matrix of the second network device based on the first information and the incident angle information between the first network device and the second network device. As an example, a detailed description is provided later and will not be elaborated here.

In summary, by obtaining the unit arrangement information and the block information of a second network device, receiving the channel feedback information sent by the terminal, determining the location information of the terminal relative to the second network device based on the channel feedback information, the unit arrangement information and the block information, and sending the first information to the second network device, in which the first information is configured to determine a phase shift matrix of the second network device, and the first information includes the channel feedback information and location information of the terminal relative to the second network device, the units of the second network device can be divided into a plurality of groups, so that a far-field assumption holds for each group. This approach also effectively reduces the complexity of precoding based on the RIS, accelerates the industrialization process, improves a communication efficiency of RIS-assisted communication system, and reduces interference.

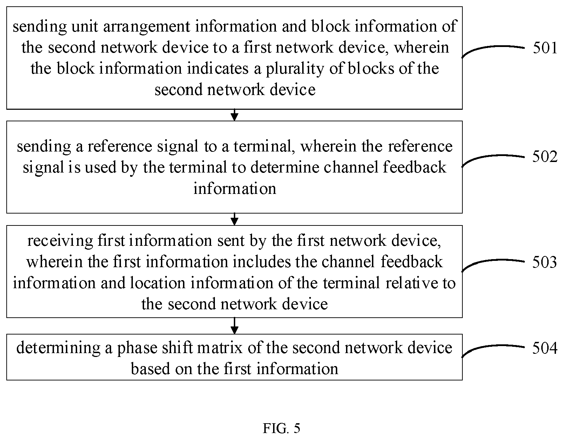

Please refer to FIG. 5, which is a flow chart illustrating a method for precoding based on an RIS provided in an embodiment of the disclosure. It should be noted that the method for precoding based on an RIS of this embodiment of the disclosure is performed by a second network device. The method may be performed independently or may be performed in combination with any one of other embodiments of the disclosure. As shown in FIG. 5 the method may include the following steps 501 to 504.

At step 501, unit arrangement information and block information of the second network device are sent to a first network device, in which the block information indicates a plurality of blocks of the second network device.

It should be noted that in embodiments of the disclosure, the second network device may be an RIS.

In an embodiment of the disclosure, the second network device may send the unit arrangement information and the block information of the second network device to the first network device. The block information of the second network device indicates the plurality of blocks of the second network device. The unit arrangement information of the second network device can indicate arrangements of units in the second network device.

It should be noted that each block of the second network device is a contiguous portion of the second network device, such as a contiguous piece of RIS surface in the RIS.

It may be understood that the first network device may determine arrangements of units in the second network device by obtaining the unit arrangement information of the second network device. The first network device may determine each block of the second network device by obtaining the block information of the second network device.

In some implementations, the unit arrangement information may include at least one of: a number of rows of the units of the second network device; a number of columns of the units of the second network device; a row spacing of the units of the second network device; a column spacing of the units of the second network device; or a unit of the second network device that is capable of sending a reference signal (which may also be an active unit of the second network device).

In some implementations, the block information may include at least one of: a number of rows of the units included in each block; a number of columns of units included in each block; or a unit at the center of each block.

It may be understood that the unit arrangement information and the block information of the second network device are flexibly configurable based on a specific shape of the second network device and the like. For example, if the second network device is a circle, the unit arrangement information of the second network device may also include a radius or a diameter of the second network device, etc., and the block information may also include other information to indicate each block of the second network device.

At step 502, a reference signal is sent to the terminal, in which the reference signal is used by the terminal to determine channel feedback information.

In an embodiment of the disclosure, the second network device may send the reference signal. The reference signal is used by the terminal to determine channel feedback information of a channel between the second network device and the terminal.

In an embodiment of the disclosure, each block of the second network device may send the reference signal. That is, the terminal may receive the reference signal sent by each block of the second network device and determine the channel feedback information based on the received reference signals.

The channel feedback information can reflect a state of the channel between each block of the second network device and the terminal. The first network device may determine first indication information for determining the phase shift matrix of the second network device based on the channel feedback information.

In some implementations, the channel feedback information includes: a plurality of PMIs and an index of a reference signal corresponding to each PMI. The PMI indicates a precoding matrix of a channel between each block of the second network device and the terminal.

It may be understood that each block of the second network device may send the reference signal. The terminal receives the reference signal sent by each block and obtain the precoding matrix of a channel between each block and the terminal by estimating the reference signal. The precoding matrix of the channel between each block and the terminal is indicated by a PMI, and the reference signal sent by that block is indicated by an index of the reference signal corresponding to the PMI.

Optionally, the precoding matrix indicated by the PMI included in the channel feedback information is an optimal precoding matrix selected by the terminal based on a 2-dimensional DFT codebook.

In some implementations, the second network device may receive first reference signal configuration information sent by the first network device. The second network device may determine the reference signal sent by each block of the second network device based on the first reference signal configuration information.

Optionally, the first reference signal configuration information may include at least one of: a unit in the block occupied by the reference signal sent by each block; generation information of a reference signal sequence sent by each block; an antenna port serial number occupied by the reference signal sent by each block; or a time and frequency resource occupied by the reference signal sent by each block.

At step 503, first information sent by the first network device is received, in which the first information includes the channel feedback information and location information of the terminal relative to the second network device.

In an embodiment of the disclosure, the second network device may receive the first information sent by the first network device and determine the phase shift matrix of the second network device based on that first information. The first information includes the channel feedback information and the location information of the terminal relative to the second network device.

The phase shift matrix of the second network device is used to configure a phase of each unit in the second network device, that is, to precode the second network device. The second network device may adjust the phase of each unit of the second network device based on the phase shift matrix configuration, realizing the precoding of the second network device.

In an embodiment of the disclosure, the location information of the terminal relative to the second network device is determined by the first network device based on the received channel feedback information, and the obtained unit arrangement information and block information.

In some implementations, the location information is determined by the first network device based on an inter block distance of the second network device, and the precoding matrix of the channel between each block of the second network device and the terminal.

Optionally, the first network device may determine the reference coordinate system where the second network device and the terminal are located, and the location information of the terminal relative to the second network device can be represented by the coordinate in the reference coordinate system.

Optionally, the first network device and the second network device may establish a coordinate system via a coordinate axis establishment method specified by a protocol, and obtain a coordinate of the terminal in the coordinate system. For example, the protocol may specify that the reference coordinate system is a right-angle coordinate system and that the center of the second network device is the origin, the direction perpendicular to the plane of the second network device is the z-axis, and the plane in which the second network device is located is the xy-plane. For another example, the protocol may specify that the reference coordinate system is a spherical coordinate system and that the center of the second network device is the origin.

Optionally, the first network device and the second network device may also negotiate and determine the coordinate axis establishment method of the coordinate system via signaling. For example, the first network device may determine the reference coordinate system based on the shape and size of the second network device and a relative location to the terminal.

At step 504, a phase shift matrix of the second network device is determined based on the first information.

In an embodiment of the disclosure, the second network device may determine the phase shift matrix based on the received first information, and then configure and adjust the phase of each unit of the second network device based on the phase shift matrix, realizing the precoding based on the RIS.

In some implementations, the second network device may determine the reference phase shift matrix of the second network device based on the first information and obtain the phase shift matrix of the second network device(a phase shift matrix that is ultimately actually used) by quantizing that reference phase shift matrix based on the phase offset value supported by the second network device.

It may be understood that the phase offset value supported by the second network device includes several discrete values, rather than continuous, and that the phases of respective units in the second network device are not continuously adjustable.

Optionally, the criterion for the quantization may be a minimum distance criterion. The phase shift matrix (the phase shift matrix that is ultimately actually used) is obtained by quantizing the reference phase shift matrix to the closest supported phase shift value to the reference phase shift matrix.

In some implementations, the second network device may determine the reference phase shift matrix based on the location information in the first information, the unit arrangement information of the second network device, the block information, and incident angle information between the first network device and the second network device.

The incident angle information between the first network device and the second network device refers to information about the angle at which a signal from the first network device is incident on the surface of the second network device.

Optionally, the first network device may send the incident angle information to the second network device, and the second network device may also measure and estimate the incident angle information by itself.

As a possible implementation, the second network device may determine a phase shift of each unit of the second network device based on coordinate information of the terminal in the determined reference coordinate system and coordinate information of each unit of the second network device in the reference coordinate system. Further, the reference phase shift matrix is determined based on the phase shift of each unit of the second network device and the incident angle information between the first network device and the second network device.

In an embodiment of the disclosure, after determining the phase shift matrix, the second network device may configure and adjust the phase of each unit of the second network device based on the phase shift matrix and reflect or transmit a signal incident on a surface of the second network device based on the adjusted phase.

In summary, by sending the unit arrangement information and the block information of the second network device to the first network device, in which the block information indicates the plurality of blocks of the second network device, sending the reference signal to the terminal, in which the reference signal is configured for the terminal to determine the channel feedback information, receiving the first information sent by the first network device, in which the first information includes the channel feedback information and the location information of the terminal relative to the second network device, and determining the phase shift matrix of the second network device based on the first information, the units of the second network device can be divided into a plurality of groups, so that a far-field assumption holds for each group. This approach also effectively reduces the complexity of precoding based on the RIS, accelerates the industrialization process, improves a communication efficiency of RIS-assisted communication system, and reduces interference.

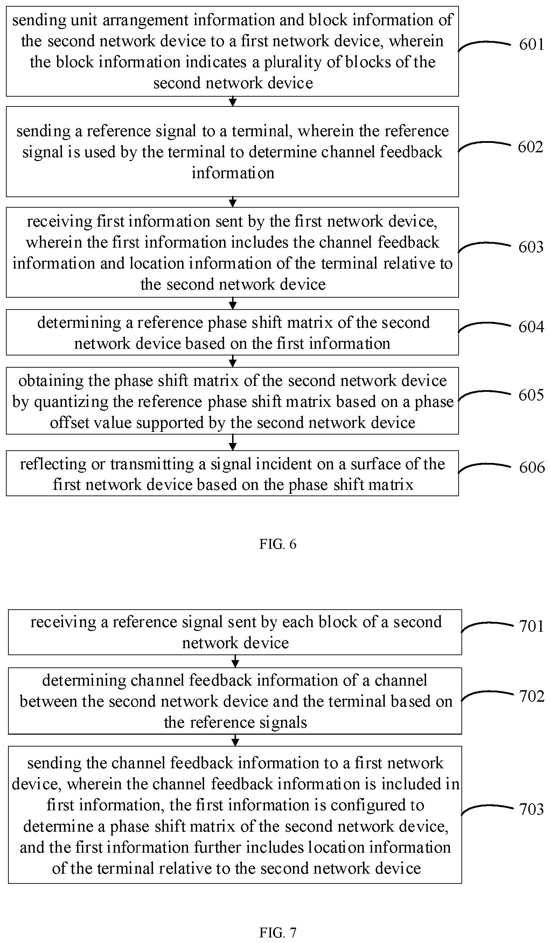

Please refer to FIG. 6, which is a flow chart illustrating a method for precoding based on an RIS provided in an embodiment of the disclosure. It should be noted that the method for precoding based on an RIS of this embodiment of the disclosure is performed by a second network device. The method may be performed independently or may be performed in combination with any one of other embodiments of the disclosure. As shown in FIG. 6 the method may include the following steps 601 to 606.

At step 601, unit arrangement information and block information of the second network device are sent to a first network device, in which the block information indicates a plurality of blocks of the second network device.

It should be noted that in embodiments of the disclosure, the second network device may be an RIS.

In an embodiment of the disclosure, the second network device may send the unit arrangement information and the block information of the second network device to the first network device. The block information of the second network device indicates the plurality of blocks of the second network device. The unit arrangement information of the second network device can indicate arrangements of units in the second network device.

It should be noted that each block of the second network device is a contiguous portion of the second network device, such as a contiguous piece of RIS surface in the RIS.

It may be understood that the first network device may determine arrangements of units in the second network device by obtaining the unit arrangement information of the second network device. The first network device may determine each block of the second network device by obtaining the block information of the second network device.

In some implementations, the unit arrangement information may include at least one of: a number of rows of the units of the second network device; a number of columns of the units of the second network device; a row spacing of the units of the second network device; a column spacing of the units of the second network device; or a unit of the second network device that is capable of sending a reference signal (which may also be an active unit of the second network device).

In some implementations, the block information may include at least one of: a number of rows of the units included in each block; a number of columns of units included in each block; or a unit at the center of each block.

It may be understood that the unit arrangement information and the block information of the second network device are flexibly configurable based on a specific shape of the second network device and the like. For example, if the second network device is a circle, the unit arrangement information of the second network device may also include a radius or a diameter of the second network device, etc., and the block information may also include other information to indicate each block of the second network device.

At step 602, a reference signal is sent to the terminal, in which the reference signal is used by the terminal to determine channel feedback information.

In an embodiment of the disclosure, the second network device may send the reference signal. The reference signal is used by the terminal to determine channel feedback information of a channel between the second network device and the terminal.

In an embodiment of the disclosure, each block of the second network device may send the reference signal. That is, the terminal may receive the reference signal sent by each block of the second network device and determine the channel feedback information based on the received reference signals.

The channel feedback information may reflect a state of the channel between each block of the second network device and the terminal. The first network device may determine first indication information for determining the phase shift matrix of the second network device based on the channel feedback information.

In some implementations, the channel feedback information includes: a plurality of PMIs and an index of a reference signal corresponding to each PMI. The PMI indicates a precoding matrix of a channel between each block of the second network device and the terminal.

It may be understood that each block of the second network device may send the reference signal. The terminal receives the reference signal sent by each block and obtain the precoding matrix of a channel between each block and the terminal by estimating the reference signal. The precoding matrix of the channel between each block and the terminal is indicated by a PMI, and the reference signal sent by that block is indicated by an index of the reference signal corresponding to the PMI.

Optionally, the precoding matrix indicated by the PMI included in the channel feedback information is an optimal precoding matrix selected by the terminal based on a 2-dimensional DFT codebook.

In some implementations, the second network device may receive first reference signal configuration information sent by the first network device. The second network device may determine a reference signal sent by each block of the second network device based on the first reference signal configuration information.

Optionally, the first reference signal configuration information may include at least one of: a unit in the block occupied by the reference signal sent by each block; generation information of a reference signal sequence sent by each block; an antenna port serial number occupied by the reference signal sent by each block; or a time and frequency resource occupied by the reference signal sent by each block.

At step 603, first information sent by the first network device is received, in which the first information includes the channel feedback information and location information of the terminal relative to the second network device.

In an embodiment of the disclosure, the second network device may receive the first information sent by the first network device and determine the phase shift matrix of the second network device based on that first information. The first information includes the channel feedback information and the location information of the terminal relative to the second network device.

The phase shift matrix of the second network device is used to configure a phase of each unit in the second network device, that is, to precode the second network device. The second network device may adjust the phase of each unit of the second network device based on the phase shift matrix configuration, realizing the precoding of the second network device.

In an embodiment of the disclosure, the location information of the terminal relative to the second network device is determined by the first network device based on the received channel feedback information, and the obtained unit arrangement information and block information.

In some implementations, the location information is determined by the first network device based on an inter block distance of the second network device, and the precoding matrix of the channel between each block of the second network device and the terminal.

Optionally, the first network device may determine the reference coordinate system where the second network device and the terminal are located, and the location information of the terminal relative to the second network device may be represented by the coordinate in the reference coordinate system.

Optionally, the first network device and the second network device may establish a coordinate system via a coordinate axis establishment method specified by a protocol, and obtain a coordinate of the terminal in the coordinate system. For example, the protocol may specify that the reference coordinate system is a right-angle coordinate system and that the center of the second network device is the origin, the direction perpendicular to the plane of the second network device is the z-axis, and the plane in which the second network device is located is the xy-plane. For another example, the protocol may specify that the reference coordinate system is a spherical coordinate system and that the center of the second network device is the origin.

Optionally, the first network device and the second network device may also negotiate and determine the coordinate axis establishment method of the coordinate system via signaling. For example, the first network device may determine the reference coordinate system based on the shape and size of the second network device and a relative location to the terminal.

In various embodiments of the disclosure, as described above, a variety of ways may be used to determine the location information of the terminal relative to the second network device based on the channel feedback information, and the unit arrangement information and the block information of the second network device, which will not be elaborated here.

At step 604, a reference phase shift matrix of the second network device is determined based on the first information.

In an embodiment of the disclosure, the second network device may determine the reference phase shift matrix of the second network device by calculation based on the received first information.

It should be noted that the phase offset value supported by the second network device includes several discrete values, rather than continuous, and that the phases of respective units in the second network device are not continuously adjustable. That is, the configured phase of each unit in the second network device corresponding to the reference phase shift matrix may not be supported by that second network device.

In some implementations, the second network device may determine the reference phase shift matrix based on the location information, the unit arrangement information and the block information of the second network device, and incident angle information between the first network device and the second network device.

The incident angle information between the first network device and the second network device refers to information about the angle at which a signal from the first network device is incident on the surface of the second network device.

Optionally, the first network device may send the incident angle information to the second network device, and the second network device may also measure and estimate the incident angle information by itself.

As a possible implementation, the second network device may determine a phase shift of each unit of the second network device based on coordinate information of the terminal in the determined reference coordinate system and coordinate information of each unit of the second network device in the reference coordinate system. Further, the reference phase shift matrix is determined based on the phase shift of each unit of the second network device and the incident angle information between the first network device and the second network device.

As an example, to determine a reference unit and a reference direction of the second network device, a square-shaped second network device that includes $M \times N$ units is described as an example. The direction parallel to the length is the reference direction of the horizontal dimension and the direction parallel to the width is the reference direction of the vertical dimension. The horizontal dimension incident angle from the first network device to the second network device is set to be $\alpha_h$. The vertical dimension incident angle from the first network device to the second network device is set to be $\alpha_v$. To compensate for a path difference caused by the incidence angle, the horizontal beam vector $\alpha_h$ and the vertical dimension beam vector $\alpha_v$ are:

$$a_h = [1, e^{j\frac{2\pi}{\lambda}d\cos\alpha_h}, e^{j\frac{2\pi}{\lambda}2d\cos\alpha_h}, \cdots, e^{j\frac{2\pi}{\lambda}Nd\cos\alpha_h}]$$

$$a_v = [1, e^{j\frac{2\pi}{\lambda}d\cos\alpha_v}, e^{j\frac{2\pi}{\lambda}2d\cos\alpha_v}, \cdots, e^{j\frac{2\pi}{\lambda}Md\cos\alpha_v}]$$

where, d is an inter unit distance of the second network device, $\lambda$ is a wavelength of electromagnetic waves, a phase shift that needs to be set for each unit due to the incident angle is $a_v^T \times a_h$, and the unit with a phase of 1 is a reference point.

In an embodiment of the disclosure, the reference coordinate system determined by the first network device and second network device is set with the reference point as an origin, the horizontal dimension direction as the x-axis, the vertical dimension direction as the y-axis, and the direction perpendicular to the plane of the second network device as the z-axis. The coordinate of the terminal in the reference coordinate system is set to be $(x_u, y_u, z_u)$, and the coordinates of each unit of the second network device are set to be:

$$\begin{bmatrix} (0,0,0) & (d,0,0) & \cdots & (Nd,0,0) \\ (0,d,0) & (d,d,0) & \cdots & (Nd,d,0) \\ \vdots & \vdots & \ddots & \vdots \\ (0,Md,0) & (d,Md,0) & \cdots & (Nd,Md,0) \end{bmatrix}$$

The coordinate of the unit in row i and column j of the second network device is $(x_{i,j}, y_{i,j}, 0)$. To realize that the signals passing through each unit of the second network device are superimposed when reaching the terminal, the phase shift of the unit in row i, column j of the second network device is obtained as:

$$\beta_{i,j} = e^{j\frac{2\pi}{\lambda}\left(\sqrt{x_u^2 + y_u^2 + z_u^2} - \sqrt{(x_u - x_{i,j})^2 + (y_u - y_{i,j})^2 + z_u^2}\right)}$$

Thus, a reflection phase shift matrix of the second network device is constituted as:

$$b = \begin{bmatrix} \beta_{1,1} & \beta_{1,2} & \cdots & \beta_{1,N} \\ \beta_{2,1} & \beta_{2,2} & \cdots & \beta_{2,N} \\ \vdots & \vdots & \ddots & \vdots \\ \beta_{M,1} & \beta_{M,2} & \cdots & \beta_{M,N} \end{bmatrix}$$

The final reference phase shift matrix is $\Theta$: $\Theta = (a_v^T \times a_h) \odot b$, in which $\odot$ is a Hadamard product.

It may be understood that the method of determining the reference phase shift matrix of the second network device described above is shown only as an example. The second network device may use other methods to determine the reference phase shift matrix. For example, the second network device may determine the reference phase shift matrix using other reference coordinate systems, setting other reference points, and etc.

At step 605, the phase shift matrix of the second network device is obtained by quantizing the reference phase shift matrix based on a phase offset value supported by the second network device.

As mentioned above, the phase offset value supported by the second network device includes several discrete values, rather than continuous, and that the phase of each unit in the second network device is not continuously adjustable. That is, the configured phase of each unit in the second network device corresponding to the reference phase shift matrix may not be supported by that second network device. Thus, the second network device needs to obtain the phase shift matrix (the phase shift matrix that is ultimately actually used) of the second network device by quantizing the reference phase shift matrix based on the phase offset value supported by the second network device.

Optionally, the criterion for the quantization may be a minimum distance criterion. The phase shift matrix (the phase shift matrix that is ultimately actually used) is obtained by quantizing the reference phase shift matrix to the closest supported phase shift value to the reference phase shift matrix.

At step 606, a signal incident on a surface of the second network device is reflected or transmitted based on the phase shift matrix.

In an embodiment of the disclosure, after determining the phase shift matrix, the second network device may configure and adjust the phase of each unit of the second network device based on the phase shift matrix and reflect or transmit a signal incident on a surface of the second network device based on the adjusted phase.

In summary, by sending the unit arrangement information and the block information of the second network device to the first network device, in which the block information indicates the plurality of blocks of the second network device, sending the reference signal to the terminal, in which the reference signal is used by the terminal to determine the channel feedback information, receiving the first information sent by the first network device, in which the first information includes the channel feedback information and the location information of the terminal relative to the second network device, determining the reference phase shift matrix of the second network device based on the first information, obtaining the phase shift matrix of the second network device by quantizing the reference phase shift matrix based on a phase offset value supported by the second network device, and reflecting or transmitting the signal incident on the surface of the second network device based on the phase shift matrix, the units of the second network device can be divided into a plurality of groups, so that a far-field assumption holds for each group. This approach also effectively reduces the complexity of precoding based on the RIS, accelerates the industrialization process, improves a communication efficiency of RIS-assisted communication system, and reduces interference.

Please refer to FIG. 7, which is a flow chart illustrating a method for precoding based on an RIS provided in an embodiment of the disclosure. It should be noted that the method for precoding based on an RIS of this embodiment of the disclosure is performed by a terminal. The method may be performed independently or may be performed in combination with any one of other embodiments of the disclosure. As shown in FIG. 7, the method may include the following steps 701 to 703.

At step 701, a reference signal sent by each block of a second network device is received.

In an embodiment of the disclosure, the terminal may receive the reference signal sent by each block of the second network device and perform a channel estimation based on the reference signal. The reference signal is sent by the second network device based on first reference signal configuration information sent by the first network device.

In embodiments of the disclosure, the second network device may be an RIS.

In some implementations, the terminal may receive second reference signal configuration information sent by a first network device and receive the reference signal sent by the second network device based on the second reference signal configuration information.

Optionally, the second reference signal configuration information may include at least one of: generation information of a reference signal sequence sent by each block; an antenna port serial number occupied by the reference signal sent by each block; or a time and frequency resource occupied by the reference signal sent by each block.

It should be noted that the channel used by the terminal to receive the reference signal configuration information sent by the first network device may be a channel that passes through the second network device or a LOS channel that does not pass through the second network device, which is not limited in the disclosure.

At step 702, channel feedback information of a channel between the second network device and the terminal is determined based on the reference signal.

In an embodiment of the disclosure, the terminal may estimate the channel between the second network device and the terminal based on the reference signal, to obtain the channel feedback information of the channel. The channel feedback information may reflect a state of the channel between each block of the second network device and the terminal.

In some implementations, the channel feedback information includes: a plurality of PMIs and an index of a reference signal corresponding to each PMI. The PMI indicates a precoding matrix of a channel between each block of the second network device and the terminal.

It may be understood that each block of the second network device may send the reference signal.

The terminal receives the reference signal sent by each block and obtain the precoding matrix of a channel between each block and the terminal by estimating the reference signal. The precoding matrix of the channel between each block and the terminal is indicated by a PMI, and the reference signal sent by that block is indicated by an index of the reference signal corresponding to the PMI.

Optionally, the precoding matrix indicated by the PMI included in the channel feedback information is an optimal precoding matrix selected by the terminal based on a 2-dimensional DFT codebook.

It should be noted that the method of estimating the channel by the terminal based on the received reference signal may use least squares (LS) estimation, or minimum mean square error (MMSE) estimation, or other estimation algorithms, and etc., and which is not limited in the disclosure.

At step 703, the channel feedback information is sent to the first network device, in which the channel feedback information is included in first information, the first information is configured to determine a phase shift matrix of the second network device, and the first information further includes location information of the terminal relative to the second network device.

In an embodiment of the disclosure, after the terminal obtains the channel feedback information of the channel between the first network device and the terminal by estimating the channel between the first network device and the terminal, the terminal may send the channel feedback information to the second network device.

The channel feedback information is included in the first information. The first information is configured to determine a phase shift matrix of the second network device. The first information further includes location information of the terminal relative to the second network device.

In an embodiment of the disclosure, the channel feedback information may be used to determine the location information of the terminal relative to the second network device.

It should be noted that the channel used by the terminal to send the channel feedback information to the first network device may be a channel that passes through the second network device or a LOS channel that does not pass through the second network device, which is not limited in the disclosure.

In summary, by receiving the reference signal sent by each block of the second network device, determining the channel feedback information of the channel between the second network device and the terminal based on the reference signal, and sending the channel feedback information to the first network device, in which the channel feedback information is included in first information, the first information is configured to determine a phase shift matrix of the second network device, and the first information further includes location information of the terminal relative to the second network device, the units of the second network device can be divided into a plurality of groups, so that a far-field assumption holds for each group. This approach also effectively reduces the complexity of precoding based on the RIS, accelerates the industrialization process, improves a communication efficiency of RIS-assisted communication system, and reduces interference.

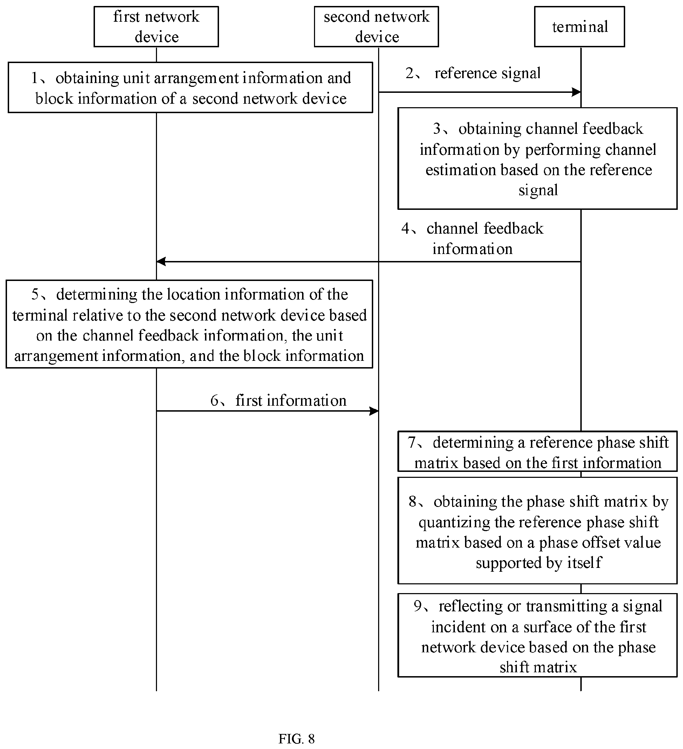

Please refer to FIG. 8, which is a flow chart illustrating a method for precoding based on an RIS provided in an embodiment of the disclosure. The method may be performed independently or may be performed in combination with any one of other embodiments of the disclosure. As shown in FIG. 8, the method may include the following steps 1 to 8.

1. The first network device obtains unit arrangement information and block information of a second network device, in which the block information indicates a plurality of blocks of the second network device.
2. The second network device sends a reference signal to the terminal. The terminal receives the reference signal sent by the second network device.
3. The terminal obtains channel feedback information by estimating a channel between the second network device and the terminal based on the reference signal.
4. The channel feedback information is sent to the first network device.
5. The first network device determines location information of the terminal relative to the second network device based on the channel feedback information, the unit arrangement information, and the block information.
In an embodiment of the disclosure, the method of determining the location information of the terminal is described previously and is not repeated herein.
6. The first network device sends first information to the second network device, in which the first information includes the channel feedback information and the location information.
7. The second network device determines a reference phase shift matrix based on the first information.
8. The second network device obtains the phase shift matrix by quantizing the reference phase shift matrix based on a phase offset value supported by the second network device.
9. The second network device reflects or transmits a signal incident on a surface of the second network device based on the phase shift matrix.

In summary, the method for precoding based on an RIS provided in embodiments of the disclosure can divide the units of the second network device into a plurality of groups, so that a far-field assumption holds for each group. The method also effectively reduces the complexity of precoding based on the RIS, accelerates the industrialization process, improves a communication efficiency of RIS-assisted communication system, and reduces interference.

Corresponding to the method for precoding based on an RIS provided in the embodiments described above, the disclosure also provides an apparatus for precoding based on an RIS. Since the apparatus for precoding based on an RIS provided in the embodiments of the disclosure corresponds to the method provided in the embodiments described above, the implementation of the method for precoding based on an RIS is also applicable to the apparatus for precoding based on an RIS provided in the following embodiments, and is not described in detail in the following embodiments.

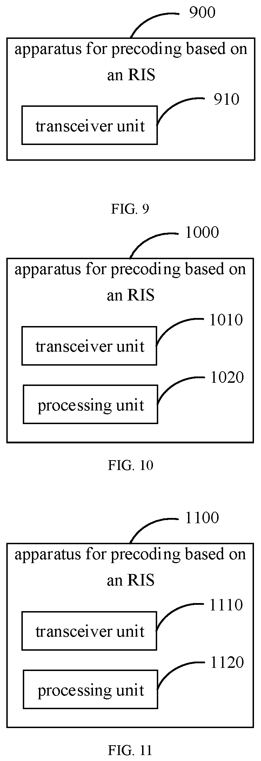

Please refer to FIG. 9, which is a block diagram illustrating an apparatus for precoding based on an RIS provided in an embodiment of the disclosure.

As shown in FIG. 9, the apparatus 900 includes: a transceiver unit 910.

The transceiver unit 910 is configured to obtain unit arrangement information and block information of a second network device, in which the block information indicates a plurality of blocks of the second network device.

The transceiver unit 910 is further configured to receive channel feedback information sent by a terminal, in which the channel feedback information is determined by the terminal based on a reference signal sent by each block of the second network device.

The transceiver unit 910 is further configured to send first information to the second network device, in which the first information is configured to determine a phase shift matrix of the second network device, and the first information includes the channel feedback information and location information of the terminal relative to the second network device.

Optionally, the apparatus further includes: a processing unit (which is not shown in the FIG. 9), configured to determine the location information based on the channel feedback information, the unit arrangement information, and the block information.

Optionally, the channel feedback information includes: a plurality of PMIs and an index of a reference signal corresponding to each PMI; and each PMI indicates a precoding matrix of a channel between each block of the second network device and the terminal.

Optionally, the processing unit is specifically configured to determine the location information based on an inter block distance of the second network device, and the precoding matrix of the channel between each block of the second network device and the terminal.

Optionally, the processing unit is further configured to determine a reference coordinate system where the second network device and the terminal are located; in which the location information of the terminal relative to the second network device is coordinate information of the terminal in the reference coordinate system.

Optionally, the first information is configured to determine a reference phase shift matrix of the second network device; and the phase shift matrix of the second network device is obtained by quantizing the reference phase shift matrix based on a phase offset value supported by the second network device.

Optionally, the reference phase shift matrix is determined based on the location information, the unit arrangement information and the block information of the second network device, and incident angle information between the first network device and the second network device.

Optionally, coordinate information of the terminal in the reference coordinate system and coordinate information of each unit of the second network device in the reference coordinate system are configured to determine a phase shift of each unit of the second network device; and the phase shift of each unit of the second network device and the incident angle information between the first network device and the second network device are configured to determine the reference phase shift matrix.

Optionally, the second network device is an RIS.

Optionally, the phase shift matrix is used for the second network device to reflect or transmit a signal incident on a surface of the second network device.

Embodiments of the disclosure provide an apparatus for precoding based on an RIS. By obtaining the unit arrangement information and the block information of a second network device, in which the block information indicates the plurality of blocks of the second network device, receiving the channel feedback information sent by the terminal, and sending the first information to the second network device, in which the first information is configured to determine a phase shift matrix of the second network device, and the first information includes the channel feedback information and location information of the terminal relative to the second network device, the units of the second network device can be divided into a plurality of groups, so that a far-field assumption holds for each group. This also effectively reduces the complexity of precoding based on the RIS, accelerates the industrialization process, improves a communication efficiency of RIS-assisted communication system, and reduces interference.

Please refer to FIG. 10, which is a block diagram illustrating an apparatus for precoding based on an RIS provided in an embodiment of the disclosure.

As shown in FIG. 10, the apparatus 1000 includes: a transceiver unit 1010 and a processing unit 1020.

The transceiver unit 1010 is configured to send unit arrangement information and block information of the apparatus to a first network device, in which the block information indicates a plurality of blocks of the apparatus.

The transceiver unit 1010 is further configured to send a reference signal to a terminal, in which the reference signal is used by the terminal to determine channel feedback information of a channel between the apparatus and the terminal.

The transceiver unit 1010 is further configured to receive first information sent by the first network device, in which the first information includes the channel feedback information and location information of the terminal relative to the apparatus.

The processing unit 1020 is configured to determine a phase shift matrix of the apparatus based on the first information.

Optionally, the location information is determined based on the channel feedback information, the unit arrangement information, and the block information.

Optionally, the channel feedback information includes: a plurality of PMIs and an index of a reference signal corresponding to each PMI; and each PMI indicates a precoding matrix of a channel between each block of the apparatus and the terminal.

Optionally, the location information is determined based on an inter block distance of the apparatus, and the precoding matrix of the channel between each block of the apparatus and the terminal.

Optionally, the processing unit 1020 is further configured to determine a reference coordinate system where the apparatus and the terminal are located; in which the location information of the terminal relative to the apparatus is coordinate information of the terminal in the reference coordinate system.

Optionally, the processing unit 1020 is specifically configured to determine a reference phase shift matrix of the apparatus based on the first information; and obtain the phase shift matrix of the apparatus by quantizing the reference phase shift matrix based on a phase offset value supported by the apparatus.

Optionally, the processing unit 1020 is specifically configured to determine the reference phase shift matrix based on the location information, the unit arrangement information of the apparatus, the block information, and incident angle information between the first network device and the apparatus.

Optionally, the processing unit 1020 is specifically configured to determine a phase shift of each unit of the apparatus based on coordinate information of the terminal in the reference coordinate system, and coordinate information of each unit of the apparatus in the reference coordinate system; and determine the reference phase shift matrix based on the phase shift of each unit of the apparatus, and the incident angle information between the first network device and the apparatus.

Optionally, the apparatus is an RIS.

Optionally, the transceiver unit 1010 is further configured to reflect or transmit a signal incident on a surface of the apparatus based on the phase shift matrix.

Embodiments of the disclosure provide an apparatus for precoding based on an RIS. By sending the unit arrangement information and the block information of the second network device to the first network device, in which the block information indicates the plurality of blocks of the second network device, sending the reference signal to the terminal, in which the reference signal is used by the terminal to determine the channel feedback information, receiving the first information sent by the first network device, in which the first information includes the channel feedback information and the location information of the terminal relative to the second network device, and determining the phase shift matrix of the second network device based on the first information, the units of the second network device can be divided into a plurality of groups, so that a far-field assumption holds for each group. This also effectively reduces the complexity of precoding based on the RIS, accelerates the industrialization process, improves a communication efficiency of RIS-assisted communication system, and reduces interference.

Please refer to FIG. 11, which is a block diagram illustrating an apparatus for precoding based on an RIS provided in an embodiment of the disclosure.

As shown in FIG. 11, the apparatus 1100 includes: a transceiver unit 1110 and a processing unit 1120.

The transceiver unit 1110 is configured to receive a reference signal sent by each block of a second network device.

The processing unit 1120 is configured to determine channel feedback information of a channel between the second network device and the apparatus based on the reference signal.

The transceiver unit 1110 is further configured to send the channel feedback information to a first network device, in which the channel feedback information is included in first information, the first information is configured to determine a phase shift matrix of the second network device, and the first information further includes location information of the apparatus relative to the second network device.

Optionally, the channel feedback information is configured to determine the location information of the apparatus relative to the second network device.

Optionally, the channel feedback information includes: a plurality of PMIs and an index of a reference signal corresponding to each PMI; and each PMI indicates a precoding matrix of a channel between each block of the second network device and the apparatus.

Optionally, the second network device is an RIS.

Embodiments of the disclosure provide an apparatus for precoding based on an RIS. By receiving the reference signal sent by each block of the second network device, determining the channel feedback information of the channel between the second network device and the terminal based on the reference signal, and sending the channel feedback information to the first network device, in which the channel feedback information is included in first information, the first information is configured to determine a phase shift matrix of the second network device, and the first information further includes location information of the terminal relative to the second network device, the units of the second network device can be divided into a plurality of groups, so that a far-field assumption holds for each group. This also effectively reduces the complexity of precoding based on the RIS, accelerates the industrialization process, improves a communication efficiency of RIS-assisted communication system, and reduces interference.

To realize the above embodiments, embodiments of the disclosure also provide a communication device. The communication device includes a processor and a memory. The memory stores a computer program, and the processor is configured to execute the computer program, so as to cause the device to implement the method illustrated in embodiments of FIG. 2 to FIG. 3, or implement the method illustrated in embodiments of FIG. 5 to FIG. 6.

To realize the above embodiments, embodiments of the disclosure also provide a communication device. The device includes a processor and a memory. The memory stores a computer program, and the processor is configured to execute the computer program, so as to cause the device to implement the method illustrated in embodiments of FIG. 7.

To realize the above embodiments, embodiments of the disclosure also provide a communication device. The device includes a processor and an interface circuit; in which the interface circuit is configured to receive code instructions and transmit code instructions to the processor; and the processor is configured to execute the code instructions to implement the method illustrated in embodiments of FIG. 2 to FIG. 3, or the method illustrated in embodiments of FIG. 5 to FIG. 6.

To realize the above embodiments, embodiments of the disclosure also provide a communication device. The device includes a processor and an interface circuit; in which the interface circuit is configured to receive code instructions and transmit code instructions to the processor; and the processor is configured to execute the code instructions to implement the method illustrated in embodiments of FIG. 7.

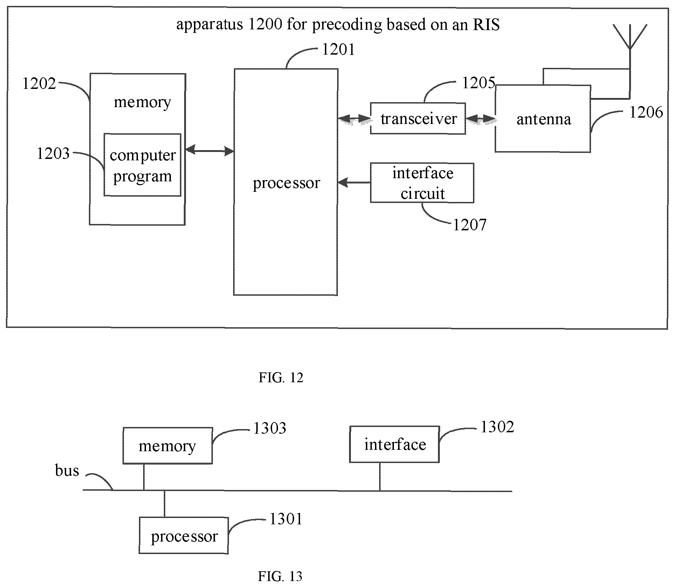

Please refer to FIG. 12, which is a block diagram illustrating another apparatus for precoding based on an RIS provided in an embodiment of the disclosure. The apparatus 1200 may be a network device, or may be a terminal, or may be a chip, a system on chip or a processor that supports the network device to implement the method, or may be a chip, a system on chip or a processor that supports the terminal to implement the method. The apparatus 1200 may be configured to implement the method described in the method embodiments, and for details, reference may be made to descriptions in the method embodiments.

The apparatus 1200 may include one or more processors 1201. The processor 1201 may be a general purpose processor or a dedicated processor. For example, the processor 1201 may be a baseband processor or a central processor. The baseband processor may be configured to process a communication protocol and communication data, and the central processor may be configured to control a communication apparatus (e.g., a base station, a baseband chip, a terminal, a terminal chip, a DU or CU, etc.), to execute a computer program, and process data of the computer program.

Optionally, the apparatus 1200 may further include one or more memories 1202 with a computer program 1203 stored thereon. The memory 1202 executes the computer program 1203 so that the apparatus 1200 performs the method as described in the above method embodiments. The computer program 1203 may be solidified in the processor 1201, in which case the processor 1201 may be implemented by a hardware.

Optionally, the memory 1202 may further store data. The apparatus 1200 and the memory 1202 may be independently configured or integrated together.

Optionally, the apparatus 1200 may further include a transceiver 1205 and an antenna 1206. The transceiver 1205 may be referred to as a transceiver unit, a transceiver machine or a transceiver circuit, which may be configured to achieve a transceiver function. The transceiver 1205 may include a receiver and a transmitter. The receiver may be referred to as a receiver or a receiving circuit, etc., for implementing a receiving function; the transmitter may be referred to as a transmitter or a transmitting circuit, etc. for implementing a transmitting function.

Optionally, the apparatus 1200 may further include one or more interface circuits 1207. The interface circuit 1207 is configured to receive code instructions and transmit the code instructions to the processor 1201. The processor 1201 runs the code instructions so that the apparatus 1200 performs the method according to the above method embodiment.

In an implementation, the processor 1201 may include a transceiver configured to implement receiving and transmitting functions. For example, the transceiver may be a transceiver circuit, or an interface, or an interface circuit. The transceiver circuit, the interface or the interface circuit configured to implement receiving and transmitting functions may be separate or integrated together. The transceiver circuit, the interface or the interface circuit may be configured to read and write codes/data, or the transceiver circuit, the interface or the interface circuit may be configured to transmit or deliver a signal.

In an implementation, the apparatus 1200 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS(BiCMOS), silicon germanium(SiGe) and gallium arsenide(GaAs).

The apparatus for precoding based on RIS described in the above embodiments may be a network device or a terminal, but the scope of the apparatus described in the disclosure is not limited thereto, and a structure of the apparatus for precoding based on RIS may not be limited by FIG. 9 to FIG. 11. The apparatus may be a stand-alone device or may be a part of a larger device. For example, the apparatus for precoding based on RIS may be the following.

(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a network device, a cloud device, an artificial intelligence device, etc.;
(6) others, and so forth.

In the case that the apparatus for precoding based on an RIS may be a chip or a system on chip, please refer to a diagram of a structure of a chip as illustrated in FIG. 13 in embodiments of the disclosure. The chip illustrated in FIG. 13 includes a processor 1301 and an interface 1302, in which the number of processors 1301 may be one or more and the number of interfaces 1302 may be more than one.

For the case where the chip is used to implement the functionality of a network device in an embodiment of the disclosure:
the Interface 1302 is configured to receive code instructions and send the code instructions to the processor.

the processor 1301 is configured to run the code instructions to perform the method as illustrated in FIG. 2 to FIG. 5, or the method as illustrated in FIG. 7 to FIG. 10.

For the case where the chip is used to implement the functionality of a terminal in an embodiment of the disclosure:

the interface 1302 is configured to receive code instructions and send the code instructions to the processor.
the processor 1301 is configured to run the code instructions to perform the method as illustrated in FIG. 11 to FIG. 12.

Optionally, the chip further includes a memory 1303, configured to save necessary computer program and data.

Those skilled in the related art may understand that, various illustrative logical blocks and steps listed in embodiments of the disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the disclosure.

A communication system is further provided in embodiments of the disclosure. The system includes an apparatus for precoding based on an RIS as a network device and an apparatus for precoding based on an RIS as a terminal in the above embodiments of FIG. 9 to FIG. 11, or, alternatively, the system includes an apparatus for precoding based on an RIS as a network device and an apparatus for precoding based on an RIS as a terminal in the above embodiments of FIG. 12.

A readable storage medium with instructions stored thereon is further provided in the disclosure. When the instructions are executed by a computer, steps in any one of the method embodiments are implemented.

A computer program product is further provided in the disclosure. The computer program product implements functions of any one of the above method embodiments when executed by a processor.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in disclosure are distinguished merely for convenience of description, and are not intended to limit the scope of embodiments of the disclosure, but also to indicate an order of precedence.

At least one in the disclosure may also be described as one or more, and a plurality of may be two, three, four or more, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the disclosure, corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the disclosure, may be implemented by an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the disclosure.

Those skilled in the art may clearly understand that, a specific working process of a system, an apparatus and a unit described above may refer to a corresponding process in the above method embodiments, which will not be repeated here.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

**Claims**

1. A method for precoding based on a reconfigurable intelligent surface (RIS), performed by a first network device, comprising:

    obtaining unit arrangement information and block information of a second network device, wherein the block information indicates a plurality of blocks of the second network device;
    receiving channel feedback information sent by a terminal, wherein the channel feedback information is determined by the terminal based on a reference signal sent by each block of the second network device; and
    sending first information to the second network device, wherein the first information is configured to determine a phase shift matrix of the second network device, and the first information comprises the channel feedback information and location information of the terminal relative to the second network device.

2. The method according to claim 1, further comprising: determining the location information based on the channel feedback information, the unit arrangement information, and the block information.

3. The method according to claim 2, wherein the channel feedback information comprises: a plurality of precoding matrix indicators (PMIs) and an index of a reference signal corresponding to each PMI; and each PMI indicates a precoding matrix of a channel between each block of the second network device and the terminal.

4. The method according to claim 3, wherein determining the location information based on the channel feedback information, the unit arrangement information, and the block information comprises:

determining the location information based on an inter block distance of the second network device, and the precoding matrix of the channel between each block of the second network device and the terminal.

5. The method according to any one of claims 2 to 4, further comprising:
determining a reference coordinate system where the second network device and the terminal are located; wherein the location information of the terminal relative to the second network device is coordinate information of the terminal in the reference coordinate system.

6. The method according to claim 5, wherein the first information is configured to determine a reference phase shift matrix of the second network device; and the phase shift matrix of the second network device is obtained by quantizing the reference phase shift matrix based on a phase offset value supported by the second network device.

7. The method according to claim 6, wherein the reference phase shift matrix is determined based on the location information, the unit arrangement information and the block information of the second network device, and incident angle information between the first network device and the second network device.

8. The method according to claim 7, wherein coordinate information of the terminal in the reference coordinate system and coordinate information of each unit of the second network device in the reference coordinate system are configured to determine a phase shift of each unit of the second network device; and
the phase shift of each unit of the second network device and the incident angle information between the first network device and the second network device are configured to determine the reference phase shift matrix.

9. The method according to any one of claims 1 to 8, wherein the second network device is an RIS.

10. The method according to any one of claims 1 to 8, wherein the phase shift matrix is used for the second network device to reflect or transmit a signal incident on a surface of the second network device.

11. A method for precoding based on a reconfigurable intelligent surface (RIS), performed by a second network device, comprising:

    sending unit arrangement information and block information of the second network device to a first network device, wherein the block information indicates a plurality of blocks of the second network device;

sending a reference signal to a terminal, wherein the reference signal is used by the terminal to determine channel feedback information of a channel between the second network device and the terminal;

receiving first information sent by the first network device, wherein the first information comprises the channel feedback information and location information of the terminal relative to the second network device; and

determining a phase shift matrix of the second network device based on the first information.

12. The method according to claim 11, wherein the location information is determined based on the channel feedback information, the unit arrangement information, and the block information.

13. The method according to claim 12, wherein the channel feedback information comprises: a plurality of precoding matrix indicators (PMIs) and an index of a reference signal corresponding to each PMI; and each PMI indicates a precoding matrix of a channel between each block of the second network device and the terminal.

14. The method according to claim 13, wherein the location information is determined based on an inter block distance of the second network device, and the precoding matrix of the channel between each block of the second network device and the terminal.

15. The method according to any one of claims 12 to 14, further comprising:
determining a reference coordinate system where the second network device and the terminal are located; wherein the location information of the terminal relative to the second network device is coordinate information of the terminal in the reference coordinate system.

16. The method according to claim 15, wherein determining a phase shift matrix of the second network device based on the first information comprises:

determining a reference phase shift matrix of the second network device based on the first information; and

obtaining the phase shift matrix of the second network device by quantizing the reference phase shift matrix based on a phase offset value supported by the second network device.

17. The method according to claim 16, wherein determining the reference phase shift matrix of the second network device based on the first information comprises:

determining the reference phase shift matrix based on the location information, the unit arrangement information and the block information of the second network device, and incident angle information between the first network device and the second network device.

18. The method according to claim 17, wherein determining the reference phase shift matrix based on the location information, the unit arrangement information of the second network device, the block information, and the incident angle information between the first network device and the second network device comprises:

determining a phase shift of each unit of the second network device based on coordinate information of the terminal in the reference coordinate system, and coordinate information of each unit of the second network device in the reference coordinate system; and

determining the reference phase shift matrix based on the phase shift of each unit of the second network device, and the incident angle information between the first network device and the second network device.

19. The method according to any one of claims 11 to 18, wherein the second network device is an RIS.

20. The method according to any one of claims 11 to 18, further comprising:
reflecting or transmitting a signal incident on a surface of the second network device based on the phase shift matrix.

21. A method for precoding based on a reconfigurable intelligent surface (RIS), performed by a terminal, comprising:

receiving a reference signal sent by each block of a second network device;

determining channel feedback information of a channel between the second network device and the terminal based on the reference signal; and

sending the channel feedback information to a first network device, wherein the channel feedback information is comprised in first information, the first information is configured to determine a phase shift matrix of the second network device, and the first information further comprises location information of the terminal relative to the second network device.

22. The method according to claim 21, wherein the channel feedback information is configured to determine the location information of the terminal relative to the second network device.

23. The method according to claim 22, wherein the channel feedback information comprises: a plurality of precoding matrix indicators (PMIs) and an index of a reference signal corresponding to each PMI; and each PMI indicates a precoding matrix for a channel between each block of the second network device and the terminal.

24. The method according to any one of claims 21 to 23, wherein the second network device is an RIS.

25. An apparatus for precoding based on a reconfigurable intelligent surface (RIS), comprising:

a transceiver unit, configured to obtain unit arrangement information and block information of a second network device, wherein the block information indicates a plurality of blocks of the second network device;

the transceiver unit is further configured to receive channel feedback information sent by a terminal, wherein the channel feedback information is determined by the terminal based on a reference signal sent by each block of the second network device;

the transceiver unit is further configured to send first information to the second network device, wherein the first information is configured to determine a phase shift matrix of the second network device, and the first information comprises the channel feedback information and location information of the terminal relative to the second network device.

26. An apparatus for precoding based on a reconfigurable intelligent surface (RIS), comprising:

a transceiver unit, configured to send unit arrangement information and block information of the apparatus to a first network device, wherein the block information indicates a plurality of blocks of the apparatus;

the transceiver unit is further configured to send a reference signal to a terminal, wherein the reference signal is used by the terminal to determine channel feedback information of a channel between the apparatus and the terminal;

the transceiver unit is further configured to receive first information sent by the first network device, wherein the first information comprises the channel feedback information and location information of the terminal relative to the apparatus; and

a processing unit, configured to determine a phase shift matrix of the apparatus based on the first information.

27. An apparatus for precoding based on a reconfigurable intelligent surface (RIS), comprising:

a transceiver unit, configured to receive a reference signal sent by each block of a second network device; and

a processing unit, configured to determine channel feedback information of a channel between the second network device and the apparatus based on the reference signal;

the transceiver unit is further configured to send the channel feedback information to a first network device, wherein the channel feedback information is comprised in first information, the first information is configured to determine a phase shift matrix of the second network device, and the first information further comprises location information of the apparatus relative to the second network device.

28. A communication system, comprising:

a first network device, configured to perform the method according to any one of claims 1 to 10;

a second network device, configured to perform the method according to any one of claims 11 to 20; and

a terminal, configured to perform the method according to any one of claims 21 to 24.

second network device 102

first network device 101

terminal 103

FIG. 1

| obtaining unit arrangement information and block information of a second network device, wherein the block information indicates a plurality of blocks of the second network device | 201 |

| receiving channel feedback information sent by a terminal | 202 |

| sending first information to the second network device, wherein the first information is configured to determine a phase shift matrix of the second network device, and the first information includes the channel feedback information and location information of the terminal relative to the second network device | 203 |

FIG. 2

| obtaining unit arrangement information and block information of a second network device | ⟶ 301 |

| receiving channel feedback information sent by a terminal | ⟶ 302 |

| determining the location information based on the channel feedback information, the unit arrangement information, and the block information | ⟶ 303 |

| sending first information to the second network device, wherein the first information is configured to determine a phase shift matrix of the second network device, and the first information includes the channel feedback information and location information | ⟶ 304 |

FIG. 3

FIG. 4a

FIG. 4b

FIG. 4c

sending unit arrangement information and block information of the second network device to a first network device, wherein the block information indicates a plurality of blocks of the second network device — 501

sending a reference signal to a terminal, wherein the reference signal is used by the terminal to determine channel feedback information — 502

receiving first information sent by the first network device, wherein the first information includes the channel feedback information and location information of the terminal relative to the second network device — 503

determining a phase shift matrix of the second network device based on the first information — 504

FIG. 5

sending unit arrangement information and block information of the second network device to a first network device, wherein the block information indicates a plurality of blocks of the second network device — 601

↓

sending a reference signal to a terminal, wherein the reference signal is used by the terminal to determine channel feedback information — 602

↓

receiving first information sent by the first network device, wherein the first information includes the channel feedback information and location information of the terminal relative to the second network device — 603

↓

determining a reference phase shift matrix of the second network device based on the first information — 604

↓

obtaining the phase shift matrix of the second network device by quantizing the reference phase shift matrix based on a phase offset value supported by the second network device — 605

↓

reflecting or transmitting a signal incident on a surface of the first network device based on the phase shift matrix — 606

FIG. 6

receiving a reference signal sent by each block of a second network device — 701

↓

determining channel feedback information of a channel between the second network device and the terminal based on the reference signals — 702

↓

sending the channel feedback information to a first network device, wherein the channel feedback information is included in first information, the first information is configured to determine a phase shift matrix of the second network device, and the first information further includes location information of the terminal relative to the second network device — 703

FIG. 7

| first network device | second network device | terminal |
|---|---|---|

1、obtaining unit arrangement information and block information of a second network device

2、reference signal

3、obtaining channel feedback information by performing channel estimation based on the reference signal

4、channel feedback information

5、determining the location information of the terminal relative to the second network device based on the channel feedback information, the unit arrangement information, and the block information

6、first information

7、determining a reference phase shift matrix based on the first information

8、obtaining the phase shift matrix by quantizing the reference phase shift matrix based on a phase offset value supported by itself

9、reflecting or transmitting a signal incident on a surface of the first network device based on the phase shift matrix

FIG. 8

900

apparatus for precoding based on
an RIS

910

transceiver unit

FIG. 9

1000

apparatus for precoding based on
an RIS

1010

transceiver unit

1020

processing unit

FIG. 10

1100

apparatus for precoding based on
an RIS

1110

transceiver unit

1120

processing unit

FIG. 11

apparatus 1200 for precoding based on an RIS

1201

1202 — memory

1203 — computer program

processor

1205 — transceiver

antenna

1206

interface circuit

1207

FIG. 12

memory 1303

interface 1302

bus

processor 1301

FIG. 13

## INTERNATIONAL SEARCH REPORT

| | International application No. |
|---|---|
| | **PCT/CN2022/119468** |

**A. CLASSIFICATION OF SUBJECT MATTER**

H04L 27/00(2006.01)i

According to International Patent Classification (IPC) or to both national classification and IPC

**B. FIELDS SEARCHED**

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNKI, CNTXT, ENTXT, ENTXTC, DWPI: 智能表面, 智能超表面, 智能反射面, 分组, 分区, 分块, 子组, 子区, 子块, 单元, 元件, 阵元, 参考信号, 信道反馈, 信道状态, 相移, 相位偏移, 矩阵, 位置, 角度, reconfigurable intelligent surface, intelligent reflecting surface, RIS, IRS, sub-group, sub-block, element, array, reference signal, RS, channel, feedback, state, phase shift, phase offset, matrix, position, angle

**C. DOCUMENTS CONSIDERED TO BE RELEVANT**

| Category* | Citation of document, with indication, where appropriate, of the relevant passages | Relevant to claim No. |
|---|---|---|
| A | CN 114499718 A (CHINA ACADEMY OF INFORMATION AND COMMUNICATIONS TECHNOLOGY) 13 May 2022 (2022-05-13) <br> description, paragraphs 0022-0089 | 1-28 |
| A | CN 113709070 A (NANTONG RESEARCH INSTITUTE FOR ADVANCED COMMUNICATION TECHNOLOGIES CO., LTD. et al.) 26 November 2021 (2021-11-26) <br> entire document | 1-28 |
| A | CN 114302410 A (NANJING ZHUAYI TECHNOLOGY CO., LTD.) 08 April 2022 (2022-04-08) <br> entire document | 1-28 |
| A | WO 2022049112 A1 (VESTEL ELEKTRONIK SANAYI VE TICARET A.S.) 10 March 2022 (2022-03-10) <br> entire document | 1-28 |
| A | WO 2022151128 A1 (QUALCOMM INC.) 21 July 2022 (2022-07-21) <br> entire document | 1-28 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 May 2023** | **24 May 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/119468**

| Patent document cited in search report | | | Publication date (day/month/year) | Patent family member(s) | | | Publication date (day/month/year) |
|---|---|---|---|---|---|---|---|
| CN | 114499718 | A | 13 May 2022 | None | | | |
| CN | 113709070 | A | 26 November 2021 | None | | | |
| CN | 114302410 | A | 08 April 2022 | None | | | |
| WO | 2022049112 | A1 | 10 March 2022 | EP | 3962006 | A1 | 02 March 2022 |
| WO | 2022151128 | A1 | 21 July 2022 | None | | | |

Form PCT/ISA/210 (patent family annex) (July 2022)